# EUROPEAN PATENT SPECIFICATION

(11) **EP 2 758 601 B1**
(45) Date of publication and mention of the grant of the patent: **23.08.2017**
(21) Application number: 11872840.1
(22) Date of filing: 22.09.2011
(51) Int. Cl.: E01F 9/512, B64F 1/18

(54) **ANTI-SKID HIGH RETROREFLECTIVITY PREFORMED THERMOPLASTIC COMPOSITES FOR RUNWAY APPLICATIONS**
RUTSCHFESTE VORGEFORMTE THERMOPLASTISCHE VERBUNDWERKSTOFFE MIT HOHER RÜCKSTRAHLKRAFT FÜR LANDEBAHNEN
COMPOSITES THERMOPLASTIQUES PRÉFORMÉS À RÉTRO-RÉFLEXION ÉLEVÉE ANTIDÉRAPANTS POUR APPLICATION À DES PISTES D'ATTERRISSAGE

(43) Date of publication of application: 30.07.2014
(73) Proprietor: Flint Trading, Inc., Thomasville, NC 27360 (US); Greer, Robert W., Lexington, NC 27295 (US); Yakopson, Simon, Hickory, NC 28601 (US); Binder, Catherine, Highpoint, NC 27265 (US)
(72) Inventor: GREER, Robert, W., Lexington, NC 27295 (US); YAKOPSON, Simon, Hickory, NC 28601 (US); BINDER, Catherine, Highpoint, NC 27265 (US)
(74) Representative: Hellmich, Wolfgang
(86) International application number: PCT/US2011/052733
(87) International publication number: WO 2013/043178

(56) References cited:
- EP-A2- 1 270 820
- WO-A1-01/42349
- DE-A1- 10 044 300
- US-A- 5 861 206
- US-A1- 2003 070 579
- US-A1- 2004 054 063
- US-A1- 2004 161 540
- US-A1- 2005 107 499

## Description

### Field of Invention

The present invention relates to preformed thermoplastic surface guidance indicia that are applied to runways and taxiways to convey information to aircraft and aircraft support operators. More specifically, the invention involves the additional features of high retroreflectivity and anti-skid properties while maintaining the necessary bonding characteristics to ensure the indicia is properly adhered to the runway and taxiway surfaces. A pre-manufactured preformed thermoplastic signage and a method for adhering large surfaces of thermoplastic signage according to the preamble parts of claims 1 and 13 are known from WO 01/42349 A1.

### Background of Invention

Airport pavement indicia and signs provide information that is useful to a pilot during takeoff, landing, and taxiing. Generally airport indicia are grouped into four categories: runway indicia, taxiway indicia, holding position indicia, and other indicia. Indicia for runways are white. Indicia for taxiways, areas not intended for use by aircraft (closed and hazardous areas), and holding positions (even if they are on a runway) are yellow. Indicia for heliports are white with the exception of medical helicopter areas which are white with a red cross.

Presently much of the runway and taxiway information is painted onto the concrete or asphalt. This paint may last for several weeks or several months depending on the amount of use, the size of the aircraft traffic using it and/or severity of environmental conditions.

It has been found that uniformity in airport indicia and signs from one airport to another enhances safety and improves efficiency. FAA Standards AC 150/5340-1 "Standards for Airport Indicia" and AC 150/5340-18 "Standards for Airport Sign Systems" are both references that define the minimum requirements for airport indicia and signage. Non-maintenance of painted indicia may allow indicia to become deteriorated to a point where the information being conveyed is confusing or illegible.

Runway indicia may also be divided into the following groups: visual runway indicia, non-precision instrument indicia and precision instrument indicia. Additional indicia are required for runway lengths over 4000 feet and for runways serving international commercial transports.

Maintenance of the painted surfaces require that runways and taxiways be shut down while the surface is prepared, paint applied and for curing time. Maintenance of a particular runway may impact the holding and taxiways of adjacent or intersecting pavement. The pavement warnings of adjacent or intersecting pavement must change to denote changes in holding areas, and thresholds to avoid ground collisions with other aircraft.

Presently many airports have allocated budgets for painting the warning, identification and directional indicia. Painting the runway surfaces is performed on a rotational basis of about every three weeks depending on the volume and size of the aircraft traffic. Although the painting of the runway surface is relatively quick, the runway traffic needs to be rerouted to other runways causing flight delays while the painting and drying of the painting occurs. It also is expensive in that full time painting crews are continually rotating from runway to runway.

Ground safety remains a problem at busy airports across the United States and the world. The movement of aircraft in and around busy airports along taxiways between terminal gates and runways presents numerous opportunities for runway incursions, particularly when visibility is poor. A runway incursion is the entry of an aircraft without clearance onto an active runway from an adjacent ramp or taxiway, for which there is a great deal of risk of collision with a landing or departing aircraft. Incursions are often the inadvertent result of pilot disorientation caused by poor visibility.

As recently as August 26, 2006, Comair Flight 5191 crashed about half a mile past the end of a runway at the Lexington, Kentucky airport, killing 49 of the 50 people onboard. The plane took off on runway 26, not runway 22 where it was assigned. It was an early morning flight with overcast skies and a slight rain. The NTSB probe is focusing their investigation on recent construction work at the Lexington airport, lighting and the indicia on the taxiways and runways.
This does not include incidents such as taxiway collisions or near misses resulting from vehicle operators mistaking one taxiway for another. Runway incursions and other taxiway incidents can still represent inconvenience and expense even when a ground collision does not result. To return an aircraft to a path from which it has strayed requires a considerable expenditure of time and fuel, and a compromise to the safety of all involved.
In addition to the need for runway signage that is relatively simply and quick to apply and that exhibits exceptional wear characteristics as well as allowing for delayed intervening scheduled maintenance, thereby assisting with the reduction of the cost of maintenance, delayed flights and confusion due to runway rerouting, the signage should also be highly retroreflective and skid resistant.

Specifically, the need for high retroreflectivity nighttime visibility has been increased to near or about 1000 millicandellas/m²/lux (mcd) and this high retroreflectivity requires glass beads that must remain at or near the top surface of the signage to ensure that the retroreflectivity is maintained during and after installation. To create the proper composition requires a specific composition of the alkyd-based preformed thermoplastic composite which is one embodiment of the present disclosure.

### Description of Related Art

US Patent No. 7744306 to Greer, et. al. describes an alkyd resin-based pre-manufactured thermoplastic airport runway signage that is applied in relatively large sections onto an airport runway. The pre-manufactured preformed thermoplastic formed as a continuous sheet and wound onto a take-up spool. The runway surface is prepared with a two part primer with a viscosity in the range of 1-300 cps at room temperature and the preformed thermoplastic is unwound from the take-up spool and positioned onto the runway surface.

U.S. Patent No. 7,175,362 to Carr, et. al., and unassigned describes a runway/taxiway system comprising a synthetic covering securely installed to an anchor positioned against but not attached to a runway/taxiway so that an edge of the covering is adjacent to an edge of the runway/taxiway and a growth retarding base placed beneath the synthetic covering and along a second side of the anchor with the base holding the anchor against the runway/taxiway.

U.S. Patent No. 5,288,163 to Munson, William D, and unassigned describes a method for identifying airport taxiways and taxiway intersections by indicia a first taxiway with a continuous elongated row of first indicia identifying the first taxiway and indicia the first taxiway with a continuous elongated row of second indicia identifying an intersection with a runway or second taxiway beginning at least 100 feet in advance of the intersection. The spacing between the second indicia decreases with proximity to the intersection indicia the intersection along the route to be traversed between the first taxiway and the runway of second taxiway with a row of second indicia and indicia the runway or second taxiway with a row of second indicia after the intersection. The spacing between the second indicia increases with proximity to the intersection and said row of second indicia extends substantially along the centerline of the runway or second taxiway.

U.S. Patent Application No. 2003/0070579A1 (abandoned) to Hong, et. al., and unassigned describes a pavement indicia construction comprising a flexible layer with top and bottom surfaces. The top surface of the flexible layer is adapted for vehicular and pedestrian traffic with the flexible layer comprising at least one thermoplastic elastomer, at least one resin and a wax. The resin is substantially miscible with the thermoplastic elastomer upon cooling from a molten state and an adhesive lower layer adjacent the bottom surface of the flexible layer is adapted to adhere the flexible layer to a pavement surface.

WIPO Publication No. WO9828372A1 to Rogers, Barry Heith, and unassigned describes an indicia composition comprising a binder component and a reflective component comprising thin sheets or pieces of material which are essentially reflective.

Japanese Publication No. JP11209909A2 to Fikute, et. al., and assigned to Port & Harbour Res Inst Ministry of Transport describes a paving structure for paving an airport and its construction method which is excellent in torsion resistance, and dispenses with the provision of a joint and heating in the case of execution. A room temperature asphalt mixture including an aggregate, an asphalt emulsion mixed with the aggregate in a state where a volume is increased by bubbling and a hydraulic setting inorganic material is paved, and after paving, a thermoplastic high-molecular polymer is supplied on the room temperature asphalt mixture and rollingly pressed to form a surface layer integrated with the paved room temperature asphalt mixture. Thus, a paving structure for paving an airport constructed in this way can be provided.

WO 01/42349 A1 discloses a reflective road marking composition and a method of producing and applying a reflective road marking composition. The thermoplastic binder contains at least 50% by weight of binder of a hydrocarbon resin. The composition comprises a thermoplastic binder and a filler in the form of beads. The most preferred type of beads is glass beads. The beads should at least have an average size of 0.1 mm. Glass beads used as reflecting agent generally have a size in the range from 0.1 to 0.8 mm, but for special purposes larger beads may be used. Glass having a refraction index of 1.44 to 2.02 is preferred.

EP 1 270 820 A2 discloses a surface marking for roadways.

US 2003/0070579 A1 teaches a preformed thermoplastic pavement marking construction.

DE 100 44 300 A1 discloses a ultra-high reflecting road marking system.

### Summary of the Invention

It is the object of this invention to provide an improved thermoplastic signage and a method for adhering large surfaces of theroplastic signage.

This object is achieved by the subject matters of the independent claims.

Preferred embodiments of the invention are the subject matters of the dependent claims.

Specifically, the need for high retroreflectivity nighttime visibility has been increased to near or about 1000 millicandellas/m²/lux (mcd) and this high retroreflectivity requires glass beads that must remain at or near the top surface of the signage to ensure that the retroreflectivity is maintained during and after installation. To create the proper composition requires a specific composition of the alkyd-based preformed thermoplastic composite which is one embodiment of the present disclosure. In addition, there still exists the need for runway signage that is relatively simple and quick to apply and that exhibits exceptional wear characteristics as well as allowing for delayed intervening scheduled maintenance, thereby assisting with the reduction of the cost of maintenance, delayed flights and confusion due to runway rerouting, and the signage should maintain skid resistance together with the increased retroreflectivity.

AirMark^{R} is an airport runway signage device that comprises an alkyd resin-based preformed thermoplastic which may be laid out in 27-37m (90'x120') sections onto airport runways. The original
AirMark formula used conventional 1.5 index beads of types I and IV from the table I below:

**Table I. Glass Bead Gradation**

| (Percent By Weight, Passing, ASTM D1214) | | | | | | | | | | | |
|---|---|---|---|---|---|---|---|---|---|---|---|
| | | Type I | | | | Type III | | Type IV | | | |
| U.S. Sieve # | Microns | A | | B | | | | A | | B | |
| | | Min | Max | Min | Max | Min | Max | Min | Max | Min | Max |
| 12 | 1700 | --- | --- | --- | --- | --- | --- | 100 | --- | 100 | --- |
| 14 | 1400 | --- | --- | --- | --- | --- | --- | 95 | 100 | --- | --- |
| 16 | 1180 | --- | --- | --- | --- | 100 | --- | 80 | 95 | 95 | 100 |
| 18 | 1000 | --- | --- | --- | --- | --- | --- | 10 | 40 | --- | --- |
| 20 | 850 | 100 | --- | --- | --- | 95 | 100 | 0 | 5 | 35 | 70 |
| 30 | 600 | 80 | 100 | --- | --- | 55 | 75 | --- | --- | 0 | 5 |
| 40 | 425 | --- | --- | --- | --- | 15 | 35 | --- | --- | --- | --- |
| 50 | 300 | 18 | 35 | --- | --- | 0 | 5 | --- | --- | --- | --- |
| 70 | 212 | --- | --- | 100 | --- | --- | --- | --- | --- | --- | --- |
| 80 | 180 | --- | --- | 85 | 100 | --- | --- | --- | --- | --- | --- |
| 100 | 150 | 0 | 10 | --- | --- | --- | --- | --- | --- | --- | --- |
| 140 | 106 | --- | --- | 15 | 55 | --- | --- | --- | --- | --- | --- |
| 200 | 75 | 0 | 2 | --- | --- | --- | --- | --- | --- | --- | --- |
| 230 | 63 | --- | --- | 0 | 10 | --- | --- | --- | --- | --- | --- |

Table 1 above is from the Federal Aviation Administration's TT-B-1325D Federal Specification regarding the use of glass beads with pavement marking. The specification below indicates the both the bead type and correspondence with the features of each bead type. To comply with the specification, the percent of beads passed through the specified sieve should be in the stated in the table limits.
The FAA TT-B-1325D Test Bead Categorization is as follows:
Type I - Low Index of Refraction recycled glass (fire-polished process) Gradation A (Coarse, Drop-on) Gradation B (Fine, Premix)
Type III - High Index of Refraction
Type IV - Low Index of Refraction direct melt glass (molten glass kiln process) Gradation A (Large Coarse, Drop-on) Gradation B (Medium Coarse, Drop-on)
The density of these (low index of refraction) beads is near or about 2.6 grams per cubic centimeter. This "first generation" AirMark^{R} produced white retroreflectivity in the 100-200 mcd range, essentially an order of magnitude below the standard required and reached by use of the new composite described herewithin.

Initially, the high index of refraction (1.9) glass beads (Type III) were provided in the original AirMark formulation and used as drop-on beads. The very surprising result is that less retroreflectivity than the conventional 1.5 index beads occurred (less than 100 mcd). It was discovered that these higher reflectivity beads sank faster in the performed thermoplastic composite due to their higher density (approximately 4 grams per cubic centimeter). The need to use these higher retroreflectivity beads, however, remains.

As with the original AirMark^{R} , this new composite may also be initially rolled and then
melted onto the runway surface using an 2.4 - 5 m (8 foot to 16 foot) wide IR heater. Hand held propane torches may also be used, such as the Flint 2000EX, available from Flint Trading, Inc. The material thickness of this runway signage is nominally 1.5 mm (.060 inches). The signage without high
retroreflectivity and anti-skid properties has a backing that is relatively thin and flexible and normally utilizes a relatively low viscosity (50-500 centipoise - cps) two component primer, such as an epoxy primer.

An embodiment of the present disclosure, however, requires the need and use of a two part epoxy primer which is nominally in the narrow viscosity range of 50-500 cps at room temperature for ensuring proper and optimal bonding to a runway or taxiway surface. Lower or higher viscosity epoxy primers do not work well for the present disclosure and associated invention due to the change in the functional composition/composite of the runway/taxiway signage. This composition/composite is described, in detail, below;
Specifically, a further embodiment requires that the composition of the preformed thermoplastic sheets must include TT-B 1325D Type III glass beads comprised of a barium-based glass chemistry such as those sold by Potters Industries, Inc. with a particle size distribution of between 300 and 1180 microns and exhibiting a density in the range of 3.5-4.5 gm/cc and an index of refraction of 1.9, within a preformed thermoplastic resin that incorporates the use of a functionalized wax, such as an oxidized microcrystalline wax or a maleic anhydride functionalized wax, or an acrylic acid copolymer with a weight average molecular weight of less than 10,000. An example of an ethylene maleic anhydride copolymer wax is sold by Honeywell Corporation under the tradename of AC 575. It is incorporated in the range of 0.2-3.0 percent by weight of the preformed thermoplastic resin. The wax provides stability of the viscosity of the preformed thermoplastic over a substantially wide temperature range (120-200°C) as opposed to compositions not including the use of such waxes. The glass beads must be suspended in the preformed thermoplastic resin and also there must be an allowance for spreading the same beads onto the surface during the application of the signage to the surface. These beads must not sink into the preformed thermoplastic during heating and application in order to maintain a retroreflectivity of at or about 1000 millicandellas/m²/lux (mcd). This retroreflectivity light intensity measurement has been required for most new airport installations in our effort to enhance safety. These beads have been known in the art but have seen limited application due to their higher cost and the fact that they scratch easily and do not hold up to high average daily traffic (ADT) when used with painted or other surface indicia. Use of the beads together with the preformed thermoplastics (either mixed into the resin composition or spread across the surface during installation) has not been known or used prior to this disclosure

A preferred embodiment is that the functionalized wax be used in a range of 0.3 to 0.5 percent by weight of the preformed thermoplastic resin.

An additional embodiment provides for a preformed thermoplastic is an alkyd resin-based pre-manufactured thermoplastic airport runway signage that is laid out in relatively large sections onto an airport runway. The preformed thermoplastic is initially formed as a continuous sheet and wound onto a take-up spool. To acquire the reflective properties necessary, glass beads with specific sizes such as described in the Federal Aviation Administration (FAA) document TT-B-1325 D, issued June 1, 1993, are both embedded within the sheet and also strategically placed over the sheet during the heating and installation procedure which is described in the next paragraph.
In addition to retroreflectivity, skid resistance, which in this case is defined as the raising of the surface friction coefficient of the preformed thermoplastic indicia layer onto the runway/taxiway to prevent slippage of airport personnel, must also be increased. During moist or wet weather conditions, there have been worker accidents attributed to slick painted indicia as well as for preformed thermoplastic AirMark^{R} signage. Use of anti-skid materials within the preformed thermoplastic sheets including corundum, quartz, sand, etc., all of which are used to increase the coefficient of friction , but must be achieved within the set of parameters as described above, namely the preformed thermoplastic sheets in the molten state, must exhibit a viscosity of between 35,000 and 85,000 cps during installation. This molten state is normally achieved at or about 150 degrees Centigrade or generally above 150 degrees Centigrade (300 degrees Fahrenheit), and with the incorporation of the anti-skid materials, optimization of the viscosity is more difficult to achieve. A lower viscosity composite will allow the glass beads to sink and thereby greatly diminish or eliminate retroreflectivity intensity, while a higher viscosity preformed thermoplastic will not sufficiently bond with the runway/taxiway surface.
The runway surface is prepared with the two-part epoxy primer and the preformed thermoplastic is unwound from the take-up spool and positioned onto the runway surface. When the preformed thermoplastic signage is in a desired location it is initially rolled conforming to the runway surface. Heat is applied to the rolled surface to a temperature of or about 150 degrees Centigrade (300°F) with this particular preformed plastic sheet composition. Fusing with a wide infra-red (IR) heater to melt the preformed thermoplastic signage into the runway surface allows for adhering the preformed thermoplastic signage to the runway surface.

The modified formulation and resulting composition of the present disclosure increases the viscosity of the preformed thermoplastic in order to retard bead sinking. Non-conventional two- part epoxy sealers were necessary (within a narrow - 50-500 cps range at room temperature) were required so that optimal bonding together with optimal retroreflectivity could be obtained.

In an additional embodiment the pre-manufactured thermoplastic signage is flexible and the material thickness is in a range of 1.3 - 1.9 mm (.050 inches-.075 inches) with a nominal thickness of 1.5 mm (.060").

Additionally the pre-manufactured thermoplastic signage that is manufactured may be shipped as 27 - 37 mm (90 foot x 120 foot) sections composed of individual 0.9 x 0.6 m (3 foot x 2 foot) sheets of material.

Another embodiment includes the ability of the large pre-manufactured thermoplastic signage to be installed quickly and easily to concrete or asphalt surfaces.

In another embodiment the pre-manufactured thermoplastic signage may also be applied to fresh asphalt surfaces as soon as the asphalt has cured to a "set".

An additional embodiment includes the fact that the pre-manufactured thermoplastic signage may have features such as indents, bumps or marks that arc visible indicators such that correct adhesion temperature are attained by the infra-red or other heating means used by those skilled in the art.

In an additional embodiment, the pre-manufactured thermoplastic signage is an alkyd thermoplastic product with the addition of a polyurethane composition for flexibility and impact resistance. The polyurethane can be aliphatic or aromatic in combination with either polyester or polyether functionality. The polyurethane must have a suitable viscosity to be used with a typical range at 190°C which provides a viscosity of between 46 Pa·s to 120.9 Pa·s (46,000 cps to 120,900 cps).

In another embodiment the pre-manufactured thermoplastic signagc is prepared to meet specific lengths and widths conforming with FAA Standards AC 150/5340-1 "Standards for Airport Indicia" and AC 150/5340-18 "Standards for Airport Sign Systems" for touchdown indicia, threshold indicia configurations, aiming point indicia and centerlines, as requirements for precision instrument runways.

In yet another embodiment the pro-manufactured thermoplastic signage is provided as alphanumeric symbols for specific information signage that is applied to the runway, taxiway or holding surface.

In another embodiment the pre-manufactured thermoplastic signage is available in various colors or hues.

The pre-manufactured thermoplastic signage has features that allow the edges to physically interconnect and interlock.

An embodiment of the disclosure is that the pre-manufactured thermoplastic signage is available for traffic within minutes of adhering the specific signage.

Additionally as another embodiment, the pre-manufactured thermoplastic signage identifies areas for aircraft support vehicles or outdoor passenger loading in non-runway areas.

An additional embodiment for the pre-manufactured thermoplastic signage identifies specific helicopter landing and takeoff areas including medical transport.

### Brief Description of the Drawings

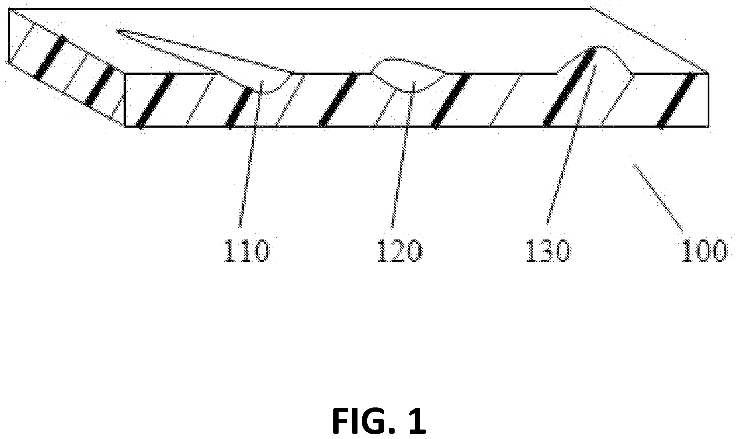

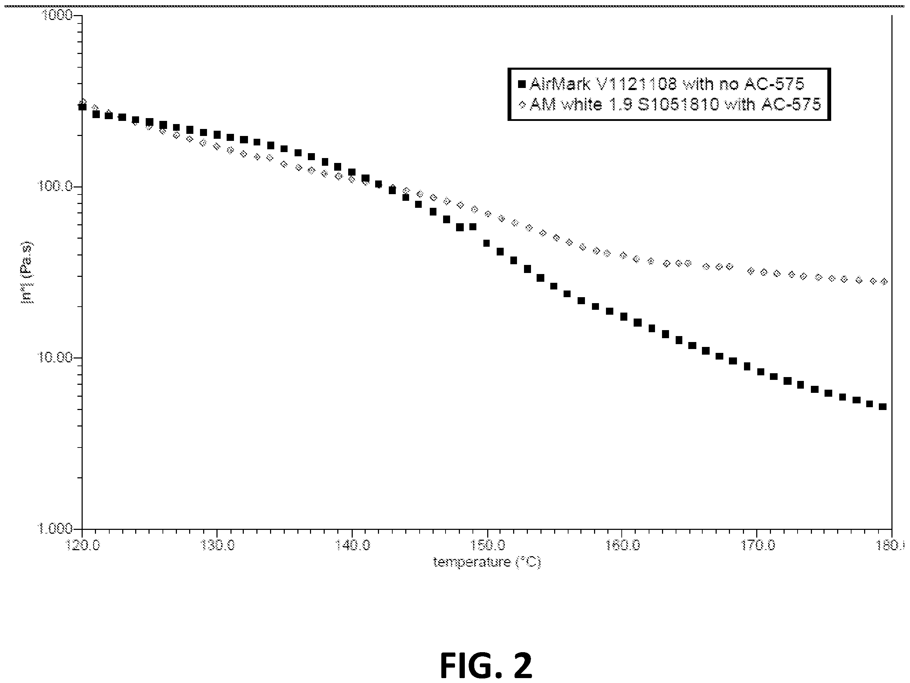

Figure 1 is an isometric cross-section of the pre-manufactured thermoplastic signage with optional temperature indicating features.

### Detailed Description of the Drawings

Figure 1 is an isometric cross section of the thermoplastic signage [100] with temperature indicating feature such as, but not limited to, an indent [110], a dimple [120] or a bump [130] or any other heat deformable marker that visibly deforms when heating elevates the temperature of the thermoplastic signage [100] to a desired temperature. When the desired temperature is reached the temperature indicating feature [110, 120, 130] visibly reforms becoming a blended surface according to the traffic surface shape to which it applied. Adhesive [140] is relatively thin and flexible and utilizes a low viscosity (50-500 cP) polyurea epoxy primer such as is available from ChemCo Systems.

## Claims

1. A pre-manufactured preformed thermoplastic signage for application to large aviation substrates comprising:
a thermoplastic alkyd or hydrocarbon resin-based composite wherein said signage comprises a bottom surface, and a top surface and edges that surround the perimeter of said composite wherein said edges are attached to said bottom surface and said top surface and wherein said top surface has surface indicia materials existing on said top surface,
the top surface of the thermoplastic signage further includes dropped on retroreflective glass beads, said glass beads are within a particle size distribution of between 300 and 1180 microns, and an index of refraction of 1.9,
**characterized in that**
said bottom surface is covered with a two-part epoxy primer; such that
said bottom surface and said primer is within a viscosity range of between 50 and 500 mPa·s, and wherein said composite includes a functionalized wax incorporated in said composite within the range of 0.2 to 3 percent by weight and yields a molten viscosity range of between 35 and 85 Pa·s when said thermoplastic signage is in a molten state, wherein said glass beads are within a density range of 3.5 to 4.5 grams per cubic centimeter such that said beads are suspended in said top surface of said preformed thermoplastic so that when said preformed thermoplastic signage is in a molten state said beads do not sink into said composite and said beads yield an overall retroreflectivity of about 1000 millicandellas/m²/lux (mcd), and wherein said composite is a continuous sheet that can be wound onto a take-up spool and wherein said composite can subsequently be unwound from said spool and positioned to conform to said large substrates and wherein subsequently said signage is heatable to a predetermined temperature; the epoxy primer thereby providing optimal adhesion of said composite to said large substrates;
and wherein said preformed thermoplastic signage includes features that allow said edges of said signage to physically interconnect and interlock with edges of other signage with the same or other features allowing said continuous sheet to be wound or unwound from spools for specific transportation and site placement needs.

2. The pre-manufactured preformed thermoplastic signage of claim 1, wherein said molten state is achieved at or about 150 degrees Centigrade.

3. The pre-manufactured preformed thermoplastic signage of claim 1 or 2, wherein said functionalized wax has a weight average molecular weight of less than 10,000 and/or wherein said functionalized wax is of an ethylene maleic anhydride copolymer variety including the wax known as AC 575^{R} and/or wherein said wax is present in a range of 0.3 to 0.5 percent by weight of said alkyd resin-based composite.

4. The pre-manufactured preformed thermoplastic signage of one of claims 1 to 3, wherein anti-skid particles are also incorporated into said resin-composite such that preformed thermoplastic sheets include corundum, quartz, sand, and other anti-skid materials thereby increasing the coefficient of friction on the surface of said thermoplastic signage.

5. The pre-manufactured preformed thermoplastic signage of one of claims 1 to 4, wherein said spool is subsequently unwound such that said signage is rolled and positioned to conform to said large substrates.

6. The pre-manufactured preformed thermoplastic signage of one of claims 1 to 5, wherein said signage is provided in sheets rather than continuous thereby providing smaller substrate sections that are shipped in boxes for convenience during installation.

7. The pre-manufactured preformed thermoplastic signage as in one of claims 1 to 6, wherein said large substrates include concrete or asphalt or wherein said large substrates are a runway, taxiway, holding position or other airport surfaces.

8. The pre-manufactured preformed thermoplastic signage as in one of claims 1 to 7, wherein said resin-based composite is flexible and conformal, and said composite is present in a thickness range of about 1.3 - 1.9 mm (0.050 inches to about 0.075 inches) or wherein said resin-based composite is 1.5 mm (0.060 inches) thick, flexible, and conforms to substrate surfaces.

9. The pre-manufactured preformed thermoplastic signage as in one of claims 1 to 8, where said resin-based composite is an alkyd- based thermoplastic composition with the addition of an aliphatic or aromatic polyether or polyester based polyurethane composition that imparts flexibility and impact resistance to the solid sheet form of said thermoplastic signage.

10. The pre-manufactured preformed thermoplastic signage as in one of claims 1 to 9, wherein said resin-based composite is cut to specific lengths and widths conforming with FAA Standards AC 150/53404-1 and AC 150/5340-18 included for touchdown indicia, threshold indicia configurations, aiming point indicia, and centerlines for precision instrument runways or wherein said signage includes an alphanumeric symbol on said area for surface indicia materials existing on said top surface and/or wherein said resin-based compositions and signage is comprised of colors and hue(s) integral and permanently molded in said composite.

11. The pre-manufactured preformed thermoplastic signage as in one of claims 1 to 10, wherein said large surfaces of said signage is trafficked within minutes after adhering said signage to any suitable aviation substrate or wherein said signage displays specific helicopter landing and takeoff indicia including medical transport indicia.

12. The pre-manufactured preformed thermoplastic signage as in one of claims 1 to 11, wherein said predetermined temperature to ensure adhesion between said signage and any suitable aviation substrate is about 204°C (400 degrees Fahrenheit).

13. A method for adhering large surfaces of thermoplastic signage to a suitable aviation substrate comprising;
an alkyd or hydrocarbon resin-based composite wherein said large surfaces include a bottom surface and a top surface and edges that surround the perimeter of and are attached to said bottom surface and said top surface;
wherein said top surface provides an area for surface indicia materials for coexisting on said top surface together with retroreflective glass beads, wherein said glass beads are within a particle size distribution of between 300 and 1180 microns, wherein said beads exhibit an index of refraction of 1.9,
**characterized in that**
said bottom surface is covered with a two-part epoxy primer and said primer treatment is provided within a viscosity range of between 50 and 500 mPa·s for bonding of said alkyd or hydrocarbon- resin based composite to said aviation substrate, wherein said composite includes a functionalized wax incorporated into said resin-based composite within the range of 0.2 to 3 percent by weight, and yields a molten viscosity range of between 35 and 85 Pa·s and wherein said glass beads are within a density range of 3.5 to 4.5 grams per cubic centimeter, such that when said beads are suspended in and applied on a surface of said resin-based composite in said molten state so that said beads do not sink into said resin-based composite allowing for maintaining an overall retroreflectivity of about 1000 millicandellas/m²/lux (mcd), and wherein said resin-based composite is forming a continuous sheet wound onto a take-up spool and wherein said resin-based composite is subsequently unwound providing positioning and conformity to said large substrates and subsequently heating said signage to a predetermined temperature providing adhesion of said resin-based composite to said aviation substrate;
and wherein said signage includes features allowing said edges of said signage to physically interconnect and interlock with edges of other signage allowing for winding or unwinding of said continuous sheet from spools for specific transportation and site placement needs.

14. The method as in claim 13, wherein said resin-based composite and associated indicia is applied to fresh asphalt immediately after said asphalt has cured.

15. The method as in claim 13 or 14, wherein said resin-based composite is heated to a necessary temperature using infra-red heaters or other heating devices and techniques to achieve said temperature to ensure precision application and bonding of said thermoplastic signage with said aviation substrates.

## Patentansprüche

1. Ein vorgefertigtes vorgeformtes thermoplastisches Leitsystem zum Aufbringen auf Luftfahrt-Untergründen mit:
einem Verbundwerkstoff auf Basis eines thermoplastischen Alkyd- oder Kohlenwasserstoffkunstharzes, wobei das Leitsystem eine Bodenfläche und eine Deckfläche und Kanten umfasst, die den Umfang des Verbundwerkstoffs umranden, wobei die Kanten an der Bodenfläche und an der Deckfläche befestigt sind und wobei die Deckfläche Oberflächenmarkierungsmaterialien aufweist, die auf der Deckfläche existieren,
wobei die Deckfläche des thermoplastischen Leitsystems ferner darauf aufgetropfte, retroreflektive Glasperlen umfasst, wobei die Glasperlen eine Körnungsgrößenverteilung zwischen 300 und 1180 Mikrometer und einen Brechungsindex von 1,9 aufweisen,
**dadurch gekennzeichnet, dass**
die Bodenfläche mit einer Zweikomponenten-Epoxid-Grundierung überzogen ist; so dass
die Bodenfläche und die Grundierung einen Viskositätsbereich zwischen 50 und 500 mPa·s aufweisen und wobei der Verbundwerkstoff ein funktionalisiertes Wachs umfasst, das in dem Verbundwerkstoff im Bereich von 0,2 bis 3 Gewichtprozent enthalten ist und einen flüssigen Viskositätsbereich zwischen 35 und 85 mPa·s ergibt, wenn sich das thermoplastische Leitsystem in einem flüssigen Zustand befindet, wobei die Glasperlen eine Dichte zwischen 3,5 bis 4,5 Gramm pro Kubikzentimeter aufweisen, so dass die Glasperlen in der Deckfläche des vorgeformten thermoplastischen Leitsystems schwebend gehalten werden, so dass, wenn sich das vorgeformte thermoplastische Leitsystem in einem flüssigen Zustand befindet, die Glasperlen nicht in den Verbundwerkstoff einsinken und die Glasperlen ein gesamtes Retroreflexionsvermögen von etwa 1000 Millicandela/m²/lux (mcd) ergeben, und wobei der Verbundwerkstoff eine fortlaufende Bahn ist, die in einer Aufnahmespule aufgewickelt werden kann und wobei der Verbundwerkstoff anschließend von der Spule abgewickelt und platziert werden kann, um sich an die großen Untergründe anzupassen und wobei anschließend die Leitsystem auf eine vorbestimmte Temperatur erhitzbar ist, wobei die Epoxid-Grundierung dadurch eine optimale Haftung des Verbundwerkstoffs an die großen Untergründe bietet;
und wobei das vorgeformte thermoplastische Leitsystem Merkmale aufweist, die es den Kanten des Leitsystems ermöglichen, sich mit Kanten eines anderen Leitsystems mit denselben oder anderen Merkmalen physikalisch zu verbinden und ineinander zu greifen, um es dieser fortlaufenden Bahn zu ermöglichen, für spezielle Beförderungs- und Standortplatzierungsbedürfnisse von Spulen auf- oder abgewickelt zu werden.

2. Das vorgefertigte vorgeformte thermoplastische Leitsystem gemäß Anspruch 1, wobei der flüssige Zustand bei oder ungefähr bei 150 Grad Celsius erreicht wird.

3. Das vorgefertigte vorgeformte thermoplastische Leitsystem gemäß Anspruch 1 oder 2, wobei das funktionalisierte Wachs ein durchschnittliches MolekularGewicht von weniger als 10000 und/oder wobei das funktionalisierte Wachs aus einer Äthylen-Maleinsäureanhydrid-Copolymerauswahl besteht, die das Wachs, bekannt als AC 575^{R} beinhaltet und/oder wobei das Wachs mit zwischen 0,3 bis 0,5 Gewichtsprozent des Verbundwerkstoffs auf Alkyd-Kunstharzbasis vorhanden ist.

4. Das vorgefertigte vorgeformte thermoplastische Leitsystem gemäß einem der Ansprüche 1 bis 3, wobei Antirutsch-Partikel ebenfalls in dem Kunstharz-Verbundwerkstoff enthalten sind, so dass die vorgeformten thermoplastischen Bahnen Korund, Quarz, Sand und andere Antirutsch-Materialien beinhalten und dadurch den Reibungskoeffizienten auf der Oberfläche des thermoplasischen Leitsystems vergrößern.

5. Das vorgefertigte vorgeformte thermoplastische Leitsystem gemäß einem der Ansprüche 1 bis 4, wobei die Spule anschließend abgewickelt wird, so dass das Leitsystem ausgerollt und platziert wird, um den großen Untergründen zu entsprechen.

6. Das vorgefertigte vorgeformte thermoplastische Leitsystem gemäß einem der Ansprüche 1 bis 5, wobei das Leitsystem eher als Platten als aufgerollt angeboten wird, wobei kleinere Untergrundabschnitte bereitgestellt werden, die für eine bequemere Verlegung in Kisten ausgeliefert werden.

7. Das vorgefertigte vorgeformte thermoplastische Leitsystem gemäß einem der Ansprüche 1 bis 6, wobei die großen Untergründe Beton oder Asphalt beinhalten oder wobei die großen Untergründe eine Startbahn, eine Rollbahn, einen Halteort oder andere Flughafenflächen darstellen.

8. Das vorgefertigte vorgeformte thermoplastische Leitsystem gemäß einem der Ansprüche 1 bis 7, wobei der auf Kunstharz basierende Verbundwerktstoff flexibel und winkelgetreu ist und der Verbundwerkstoff eine Dicke von ungefähr 1,3 bis 1,9 mm (0,050 Zoll bis ungefähr 0,075 Zoll) aufweist oder wobei der auf Kunstharz basierende Verbundwerktstoff 1,5 mm (0,060 Zoll) dick und flexibel ist, und zur Untergrundoberfläche passt.

9. Das vorgefertigte vorgeformte thermoplastische Leitsystem gemäß einem der Ansprüche 1 bis 8, wobei der auf Kunstharz basierende Verbundwerkstoff ein auf Alkyd basierender thermoplastischer Verbundwerkstoff mit dem Zusatz eines auf aliphatischem oder aromatischem Polyäther oder Polyester basierenden Polyurethan-Verbundwerkstoffs ist, der der Festplattenform des thermoplastischen Leitsystems Flexibilität und Schlagbeständigkeit verleiht.

10. Das vorgefertigte vorgeformte thermoplastische Leitsystem gemäß einem der Ansprüche 1 bis 9, wobei der auf Kunstharz basierende Vebundwerkstoff in bestimmte Längen und Breiten geschnitten wird, die den FAA Standards AC 150/53404-1 und AC 150/5340-18 entsprechen, die in Aufsetzmarkierungen, Schwellenmarkierungsgestaltungen, Zielpunktmarkierungen und Mittellinien für Präzisionsinstumentanflugpisten enthalten sind oder wobei das Leitsystem ein Alfanumerisches Symbol auf dem Bereich für Flächenmarkierunsmaterialien enthält, die sich auf der Deckfläche befinden und/oder wobei die auf Kunstharz basierenden Verbundwerkstoffe und das Leitsystem aus Farben und Farbtönen gebildet werden, die dauerhaft in den Verbundwerkstoff eingegossen sind.

11. Das vorgefertigte vorgeformte thermoplastische Leitsystem gemäß einem der Ansprüche 1 bis 10, wobei die großen Flächen des Leitsystems innerhalb von Minuten nach dem Anhaften des Leitsystems auf jeden passenden Luftfahrt-Untergrund befahren wird oder wobei das Leitsystem spezifische Helikopter Lande- und Startmarkierungen, einschließlich medizinische Transportmarkierungen, anzeigt.

12. Das vorgefertigte vorgeformte thermoplastische Leitsystem gemäß einem der Ansprüche 1 bis 11, wobei die vorbestimmte Temperatur, die Haftung zwischen dem Leitsystem und jedem passenden Luftfahrt-Untergrund bei ungefähr 204°C (400 Grad Fahrenheit) sicherstellt, liegt.

13. Ein Verfahren zum Ankleben von großen Flächen eines thermoplastischen Leitsystems auf einem Luftfahrt-Untergrund mit:
einem Verbundwerkstoff auf Alkyd- oder Kohlenwasserstoffkunstharzbasis, wobei die großen Flächen eine Bodenfläche und eine Deckfläche und Kanten umfassen, die den Umfang der Boden- und Deckfläche umranden und an der Bodenfläche und an der Deckfläche befestigt sind,
wobei die Deckfläche einen Bereich für Flächenmarkierungsmaterialien bereitstellt, die mit retroreflektiven Glasperlen auf der Deckfläche koexistieren, wobei die Glasperlen eine Körnungsgrößenverteilung zwischen 300 und 1180 Mikrometer und einen Brechungsindex von 1,9 aufweisen,
**dadurch gekennzeichnet, dass**
die Bodenfläche mit einer Zweikomponenten-Epoxid-Grundierung überzogen ist, und
die Grundierungsbehandlung in einem Viskositätsbereich zwischen 50 und 500 mPa·s vorgesehen ist, um den Verbundwerkstoff auf Alkyd- oder Kohlenwasserstoffkunstharzbasis mit dem Luftfahrt-Untergrund zu verbinden, wobei der Verbundwerkstoff ein funktionalisiertes Wachs umfasst, das in den Verbundwerkstoff im Bereich von 0,2 bis 3 Gewichtprozent eingearbeitet ist und einen flüssigen Viskositätsbereich zwischen 35 und 85 mPa·s ergibt und wobei die Glasperlen eine Dichte zwischen 3,5 bis 4,5 Gramm pro Kubikzentimeter aufweisen, so dass die Glasperlen in der Deckfläche des Verbundwerkstoffs auf Kunstharzbasis in dem geschmolzenen Zustand schwebend gehalten und auf der Deckfläche angebracht werden, so dass die Glasperlen nicht in den Verbundwerkstoff auf Kunstharzbasis einsinken und die Glasperlen ein gesamtes Retroreflexionsvermögen von etwa 1000 Millicandela/m²/lux (mcd) ermöglichen, und wobei der Verbundwerkstoff auf Kunstharzbasis eine fortlaufende Bahn bildet, die auf einer Aufnahmespule aufgewickelt ist und wobei der Verbundwerkstoff auf Kunstharzbasis anschließend von dieser Spule abgewickelt wird und Positionierung und Übereinstimmung mit den großen Untergründen und anschließendes Erhitzen des Leitsystems bis zu einer vorbestimmten Temperatur vorgesehen ist, wobei die Haftung des Verbundwerkstoffs auf Epoxidharzbasis an den Luftfahrt-Untergründen bereitgestellt wird;
und wobei das Leitsystem Merkmale aufweist, die es den Kanten des Leitsystems ermöglichen, sich mit Kanten eines anderen Leitsystems mit denselben oder anderen Merkmalen physikalisch zu verbinden und ineinander zu greifen, um der fortlaufenden Bahn zu ermöglichen, für spezielle Beförderung und für die Standortplatzierung von Spulen auf- oder abgewickelt zu werden.

14. Das Verfahren gemäß Anspruch 13, wobei der auf Kunstharz basierende Verbundwerkstoff und die dazugehörigen Markierungen sofort, nachdem der Asphalt ausgehärtet ist, auf frischem Asphalt aufgebracht werden.

15. Das Verfahren gemäß einem der Ansprüche 13 oder 14, wobei der auf Verbundwerkstoff auf Kunstharzbasis auf die notwendige Temperatur erwärmt wird, wobei Infrarotheizer oder andere Heizgeräte oder Techniken verwendet werden, um die Temperatur zu erreichen, um eine Präzisionsaufbringung und die Verbindung des thermoplastischen Leitsystems mit den Luftfahrt-Untergründen sicherzustellen.

## Revendications

1. Signalisation thermoplastique préformée préfabriquée pour application à de grands substrats d'aviation, comprenant :
un composite thermoplastique à base de résine d'alkyde ou d'hydrocarbure, dans laquelle ladite signalisation comprend une surface inférieure, une surface supérieure et des bords entourant le périmètre dudit composite, dans laquelle lesdits bords sont fixés à ladite surface inférieure et à ladite surface supérieure et dans laquelle ladite surface supérieure a des matériaux d'indices de surface existant sur ladite surface supérieure ;
la surface supérieure de la signalisation thermoplastique comprend en outre des billes de verre rétroréfléchissantes lâchées, lesdites billes de verre étant comprises dans une répartition de taille de particule comprise entre 300 et 1180 microns et ayant un indice de réfraction de 1,9 ;
**caractérisée en ce que** :
ladite surface inférieure est couverte avec un apprêt époxydique à deux composants ; de telle sorte que :
ladite surface inférieure et ledit apprêt est compris dans une fourchette de viscosité comprise entre 50 et 500 mPa · s et dans laquelle ledit composite comprend une cire fonctionnalisée incorporée dans ledit composite dans la fourchette de 0,2 à 3 pour cent en poids et donne une fourchette de viscosité fondue comprise entre 35 et 85 Pa · s lorsque ladite signalisation thermoplastique est dans un état fondu, dans laquelle lesdites billes de verre sont comprises dans une fourchette de densité de 3,5 à 4,5 grammes par centimètre cube de telle sorte que lesdites billes soient suspendues dans ladite surface supérieure dudit thermoplastique préformé de sorte que lorsque ladite signalisation thermoplastique préformée est dans un état fondu, lesdites billes ne s'enfoncent pas dans ledit composite et lesdites billes donnent une rétroréflexion d'ensemble d'environ 1000 millicandellas/m²/lux (mcd) et dans laquelle ledit composite est une feuille continue qui peut être enroulée sur une bobine de reprise et dans laquelle ledit composite peut ensuite être déroulé de ladite bobine et positionné pour se conformer auxdits grands substrats et dans laquelle ladite signalisation peut ensuite être chauffée à une température prédéterminée, l'apprêt époxydique fournissant ainsi une adhérence optimale dudit composite auxdits grands substrats ;
et dans laquelle ladite signalisation thermoplastique préformée comprend des caractéristiques permettant auxdits bords de ladite signalisation de s'interrelier et s'interverrouiller physiquement avec les bords de l'autre signalisation présentant la même caractéristique ou des caractéristiques différentes, permettant d'enrouler ou de dérouler ladite feuille continue à partir de bobines pour répondre aux besoins spécifiques de transport et de placement sur le site.

2. Signalisation thermoplastique préformée préfabriquée selon la revendication 1, dans laquelle ledit état fondu est obtenu à exactement ou approximativement 150 degrés centigrades.

3. Signalisation thermoplastique préformée préfabriquée selon la revendication 1 ou 2, dans laquelle ladite cire fonctionnalisée a un poids moléculaire moyen pondéré inférieur à 10 000 et/ou dans laquelle ladite cire fonctionnalisée est de la variété d'un copolymère d'éthylène et d'anhydride maléique comprenant la cire connue sous la dénomination AC 575R et/ou dans laquelle ladite cire est présente dans une fourchette de 0,3 à 0,5 pour cent en poids dudit composite à base de résine d'alkyle.

4. Signalisation thermoplastique préformée préfabriquée selon l'une quelconque des revendications 1 à 3, dans laquelle des particules antidérapantes sont également incorporées dans ledit composite de résine de telle sorte que des feuilles thermoplastiques préformées comprennent du corindon, du quartz, du sable et d'autres matériaux antidérapants, augmentant ainsi le coefficient de frottement sur la surface de ladite signalisation thermoplastique.

5. Signalisation thermoplastique préformée préfabriquée selon l'une quelconque des revendications 1 à 4, dans laquelle ladite bobine est ensuite déroulée de telle sorte que ladite signalisation soit enroulée et positionnée pour se conformer auxdits grands substrats.

6. Signalisation thermoplastique préformée préfabriquée selon l'une quelconque des revendications 1 à 5, dans laquelle ladite signalisation est prévue sous la forme de feuilles plutôt qu'en continu, fournissant ainsi des sections de substrat plus petites expédiées dans des boîtes pour une plus grande commodité pendant l'installation.

7. Signalisation thermoplastique préformée préfabriquée selon l'une quelconque des revendications 1 à 6, dans laquelle lesdits grands substrats comprennent du béton ou de l'asphalte ou dans laquelle lesdits grands substrats sont une piste d'atterrissage, une voie de circulation, une aire de stationnement ou toutes autres surfaces d'aéroport.

8. Signalisation thermoplastique préformée préfabriquée selon l'une quelconque des revendications 1 à 7, dans laquelle ledit composite à base de résine est flexible et conforme et ledit composite est présent dans une fourchette d'épaisseur d'environ 1,3 - 1,9 mm (0,50 pouce à approximativement 0,075 pouce) ou dans laquelle l'épaisseur dudit composite à base de résine est de 1,5 mm (0,060 pouce), est flexible et se conforme aux surfaces de substrat.

9. Signalisation thermoplastique préformée préfabriquée selon l'une quelconque des revendications 1 à 8, dans laquelle ledit composite à base de résine est une composition thermoplastique à base d'alkyde avec ajout d'une composition de polyuréthane à base de polyéther ou de polyester aliphatique ou aromatique garantissant la flexibilité et la résistance aux chocs à la forme de feuille solide de ladite signalisation thermoplastique.

10. Signalisation thermoplastique préformée préfabriquée selon l'une quelconque des revendications 1 à 9, dans laquelle ledit composite à base de résine est coupé à des longueurs et des largeurs spécifiques se conformant aux normes FAA AC 150/53404-1 et AC 150/5340-18 comprises pour des indices de toucher des roues, des configurations d'indices de seuil, des indices de point de visée et des lignes centrales pour des pistes d'atterrissage d'instrument de précision ou dans laquelle ladite signalisation comprend un symbole alphanumérique sur ladite aire pour matériaux d'indices de surface existant sur ladite surface supérieure et/ou dans laquelle lesdites compositions à base de résine et la signalisation est composée de couleurs et teinte(s) faisant partie intégrante du composite et en permanence moulées dans celui-ci.

11. Signalisation thermoplastique préformée préfabriquée selon l'une quelconque des revendications 1 à 10, dans laquelle lesdites grandes surfaces de ladite signalisation peuvent servir pour la circulation en quelques minutes après fixation de ladite signalisation à n'importe quel substrat d'aviation adapté ou dans laquelle ladite signalisation donne des indices de décollage et d'atterrissage d'hélicoptère spécifique comprenant les indices de transport médical.

12. Signalisation thermoplastique préformée préfabriquée selon l'une quelconque des revendications 1 à 11, dans laquelle ladite température prédéterminée pour garantir l'adhérence entre ladite signalisation et n'importe quel substrat d'aviation adapté est d'environ 204° (400 degrés Fahrenheit).

13. Procédé de fixation de grandes surfaces de signalisation thermoplastique à un substrat d'aviation adapté comprenant :
un composite à base de résine d'alkyde ou d'hydrocarbure dans lequel ladite signalisation comprend une surface inférieure, une surface supérieure et des bords entourant le périmètre dudit composite et fixés à ladite surface inférieure et à ladite surface supérieure;
dans lequel ladite surface supérieure fournit une aire pour matériaux d'indices de surface en vue de la faire coexister sur ladite surface supérieure conjointement avec des billes de verre rétroréfléchissantes, dans lequel lesdites billes de verre sont comprises dans une répartition de taille de particule comprise entre 300 et 1180 microns, dans lequel lesdites billes ont un indice de réfraction de 1,9 ;
**caractérisé en ce que** :
ladite surface inférieure est couverte avec un apprêt époxydique à deux composants et ledit traitement d'apprêt est prévu dans une fourchette de viscosité comprise entre 50 et 500 mPa · s pour lier solidement ledit composite à base de résine d'alkyde ou d'hydrocarbure audit substrat d'aviation, dans lequel ledit composite comprend une cire fonctionnalisée incorporée dans ledit composite à base de résine comprise dans la fourchette de 0,2 à 3 pour cent en poids et donne une fourchette de viscosité fondue comprise entre 35 et 85 Pa · s et dans lequel lesdites billes de verre sont comprises dans une fourchette de densité de 3,5 à 4,5 grammes par centimètre cube, de telle sorte que lorsque lesdites billes sont suspendues dans une surface dudit composite à base de résine et appliquées sur elle dans ledit état fondu, lesdites billes ne s'enfoncent pas dans ledit composite à base de résine, permettant de maintenir une rétroréflexion d'ensemble d'environ 1000 millicandellas/m²/lux (mcd) et dans lequel ledit composite à base de résine forme une feuille continue enroulée sur une bobine de reprise et dans lequel ledit composite à base de résine est ensuite déroulé de façon à se positionner par rapport aux grands substrats et à se conformer à eux, avant de chauffer ladite signalisation à une température prédéterminée, permettant l'adhérence dudit composite à base de résine audit substrat d'aviation ;
et dans laquelle ladite signalisation comprend des caractéristiques permettant auxdits bords de ladite signalisation de s'interrelier et s'interverrouiller physiquement avec les bords de l'autre signalisation, permettant d'enrouler ou de dérouler ladite feuille continue à partir de bobines pour répondre aux besoins spécifiques de transport et de placement sur le site.

14. Procédé selon la revendication 13, dans lequel ledit composite à base de résine et les indices associés est appliqué à de l'asphalte frais immédiatement après le durcissement dudit asphalte.

15. Procédé selon la revendication 13 ou 14, dans lequel ledit composite à base de résine est chauffé à une température nécessaire par des éléments chauffants infrarouges ou d'autres dispositifs et techniques de chauffage pour atteindre ladite température afin de garantir une application de précision et la liaison solide de ladite signalisation thermoplastique avec lesdits substrats d'aviation.
